# EUROPÄISCHE PATENTANMELDUNG

(11) **EP 4 455 034 A1**
(43) Veröffentlichungstag der Anmeldung: **30.10.2024**
(21) Anmeldenummer: 23169965.3
(22) Anmeldetag: 26.04.2023
(51) Int. Cl.: B65B 29/02, B65B 1/24, B65B 59/04, A47J 31/40

(54) **VORRICHTUNG ZUM EINFÜLLEN UND VERDICHTEN VON PULVER ODER GRANULAT**

(71) Anmelder: Etzinger ENGINEERING, FL-9492 Eschen (LI)
(72) Erfinder: ETZINGER, Christian, FL-9492 Eschen (LI)
(74) Vertreter: Kaminski Harmann

(57) **Zusammenfassung**

Die vorliegende Erfindung betrifft eine Vorrichtung 1 zum Einfüllen und Verdichten von Pulver oder Granulat in ein Behältnis 8, wobei das Pulver oder Granulat durch eine separate Apparatur 22 bereitgestellt wird und wobei die Vorrichtung 1 eine Mantelfläche 2, mindestens eine Einlassöffnung 11 zum Einlassen des Pulvers oder Granulats in die Vorrichtung 1, mindestens eine Auslassöffnung 12 zum Auslassen des Pulvers oder Granulats aus der Vorrichtung 1 in das Behältnis 8, einen Innenraum 13, wobei der Innenraum 13 zumindest von der Mantelfläche 2 begrenzt wird, und die Einlassöffnung 11 mit der Auslassöffnung 12 verbindet, einen bewegbaren Stempel 14 zum Verdichten von in dem Behältnis 8 befindlichem Pulver oder Granulat, mindestens ein Befestigungselement 19, wobei das mindestens eine Befestigungselement 19 dazu vorgesehen ist, mit einem entsprechenden Gegenstück 21 an der separaten Apparatur 22 zusammenzuwirken und so eine temporäre Befestigung der Vorrichtung 1 an der separaten Apparatur 22 bereitzustellen, und mindestens ein Halteelement 9, wobei das mindestens eine Halteelement 9 dazu vorgesehen ist, das Behältnis 8 temporär an der Vorrichtung 1 zu halten, aufweist.

## Beschreibung

### Gebiet der Erfindung

Die vorliegende Erfindung betrifft eine Vorrichtung zum Einfüllen und Verdichten von Pulver oder Granulat, insbesondere von Kaffeepulver, in ein Behältnis, insbesondere in eine Kaffeekapsel, wobei das Pulver oder Granulat durch eine separate Apparatur bereitgestellt wird.

### Hintergrund der Erfindung

Systeme bestehend aus einer Mühle und einer Befüllvorrichtung, die das von der Mühle bereitgestellte Pulver in ein entsprechendes Gefäss einfüllt, sind aus dem Stand der Technik bekannt.

So offenbaren beispielsweise die Schriften DE 10 2018 009 992 A1 und WO 2016/029355 A1 Systeme bestehend aus einer Kaffeemühle und einer Befüllvorrichtung, die das durch die Kaffeemühle bereitgestellte Kaffeepulver in wiederbefüllbare Kaffeekapseln einfüllt.

Ein Nachteil der Systeme des Stands der Technik ist, dass es sich dabei um Systeme handelt, bei denen die Mühle, insbesondere die Kaffeemühle, mit dem Befüllvorrichtung fest verbaut ist. Es ist dem Benutzer dadurch nicht möglich, beispielsweise die Befüllvorrichtung von der Mühle abzutrennen und die Befüllvorrichtung als alleinstehende Vorrichtung zu verwenden. Eine solche Anwendung könnte jedoch für den Benutzer interessant sein, falls der einzufüllende Stoff bereits in Pulverform vorliegt (z.B. gekauftes Kaffeepulver) und ein vorangestellter Mahlschritt nicht erforderlich ist.

Ein weiterer Nachteil der Systeme des Stands der Technik ist, dass diese Systeme gross, schwer und unhandlich sind und sich daher nicht für Anwendungen eignen, bei denen Gewicht und Platz gespart werden müssen (z.B. falls der Benutzer für eine Urlaubsreise nur wenig Platz in seinem Gepäck hat), ungeeignet sind.

### Aufgabe der Erfindung

Es ist deshalb die Aufgabe der Erfindung, eine Vorrichtung zum Einfüllen und Verdichten von Pulver oder Granulat und ein System aus der erfindungsgemässen Vorrichtung und einer handhaltbaren Mühle bereitzustellen, welche die Nachteile aus dem Stand der Technik überwinden, insbesondere im Lichte einer flexiblen Anwendung der Systemteile und des Tragekomforts.

Diese Aufgabe wird durch die Verwirklichung zumindest eines Teils der kennzeichnenden Merkmale der unabhängigen Patentansprüche gelöst. Merkmale, welche die Erfindung in alternativer oder vorteilhafter Weise weiterbilden, sind einigen der übrigen Merkmale der unabhängigen Patentansprüche und den abhängigen Patentansprüchen zu entnehmen.

### Zusammenfassung der Erfindung

Die Erfindung betrifft eine Vorrichtung zum Einfüllen und Verdichten von Pulver oder Granulat, insbesondere von Kaffeepulver, in ein Behältnis, insbesondere in eine Kaffeekapsel, wobei das Pulver oder Granulat durch eine separate Apparatur bereitgestellt wird und wobei die Vorrichtung aufweist:
- eine Mantelfläche, wobei die Mantelfläche eine Mittelachse der Vorrichtung umläuft, insbesondere wobei die Mittelachse der Vorrichtung einer Längsachse der Vorrichtung entspricht,
- mindestens eine Einlassöffnung zum Einlassen des Pulvers oder Granulats in die Vorrichtung, wobei sich die mindestens eine Einlassöffnung innerhalb einer Deckfläche der Vorrichtung erstreckt,
- mindestens eine Auslassöffnung zum Auslassen des Pulvers oder Granulats aus der Vorrichtung in das Behältnis, wobei sich die mindestens eine Auslassöffnung innerhalb einer Grundfläche der Vorrichtung erstreckt,
- einen Innenraum, wobei der Innenraum
   ∘ zumindest von der Mantelfläche begrenzt wird, und
   ∘ die Einlassöffnung mit der Auslassöffnung verbindet, und
- einen bewegbaren Stempel zum Verdichten von in dem Behältnis befindlichem Pulver oder Granulat, wobei der Stempel innerhalb des Innenraums angeordnet ist und dazu vorgesehen ist, in einer zur Mittelachse parallelen Richtung, insbesondere koaxial entlang der Mittelachse, bewegt zu werden,
wobei die Vorrichtung weiter aufweist:
- mindestens ein Befestigungselement, wobei das mindestens eine Befestigungselement dazu vorgesehen ist, mit einem entsprechenden Gegenstück an der separaten Apparatur zusammenzuwirken und so eine temporäre Befestigung der Vorrichtung an der separaten Apparatur bereitzustellen, und
- mindestens ein Halteelement, wobei das mindestens eine Halteelement dazu vorgesehen ist, das Behältnis temporär an der Vorrichtung zu halten, insbesondere wobei das Halteelement so ausgebildet ist, dass das Behältnis mit einem Abstand von 0 mm bis 50 mm an der Vorrichtung gehalten und/oder eine Öffnung des Behältnisses mit der Auslassöffnung zumindest weitgehend zur Deckung gebracht werden kann.

Dadurch, dass sich die erfindungsgemässe Vorrichtung flexibel von der separaten Apparatur abtrennen und wieder anbringen lässt, ist es dem Benutzer ermöglicht, die Vorrichtung als eigenständiges Gerät nach seinen Bedürfnissen und Wünschen zu nutzen. Möchte der Benutzer der erfindungsgemässen Vorrichtung beispielsweise Kaffeepulver in eine Kaffeekapsel einfüllen und dort verdichten, so kann er beispielsweise bereits gemahlenes Kaffeepulver mittels eines Löffels durch die Einlassöffnung in die Vorrichtung einfüllen. Das Anbringen einer Kaffeemühle, die das Kaffeepulver durch Mahlen bereitstellt, an der Vorrichtung (was über das Befestigungselement ohne weiteres möglich wäre), ist somit nicht obligatorisch. Auf diese Weise ist die erfindungsgemässe Vorrichtung deutlich flexibler einsetzbar als vergleichbare Vorrichtungen aus dem Stand der Technik, die sich nicht von der Mühle abtrennen lassen.

Die erfindungsgemässe Vorrichtung kann auch mit einer elektrisch betriebenen Kaffeemühle verwendet werden, vorzugsweise mit einer elektrischen Mühle mit integrierter Waage. Mittel einer solchen Mühle kann die für die Befüllung der Kaffeekapsel erforderliche oder gewünschte Kaffeemenge in sehr kurzer Zeit, z.B. unter 2 Sekunden, bereitgestellt werden. Die Befüllvorrichtung kann hierfür direkt unter dem Auslass der Mühle angeordnet werden. So kann eine Kapsel in sehr kurzer Zeit sehr genau mit der gewünschten Kaffeemenge befüllt werden. Mit einer zeitgesteuerten Kaffeemühle kann das Mahlen und Befüllen der Kapsel ähnlich schnell und präzise erfolgen. Direkt anschliessend kann dann mit der befüllten Kaffeekapsel in einer dafür ausgebildeten Kaffeemaschine Kaffee produziert werden.

Das Herstellen einer befüllten Kaffeekapsel und das Produzieren des Kaffees kann hierdurch vergleichsweise schnell und wiederholt in zuverlässiger Qualität erfolgen.

In einer exemplarischen Ausführungsform der erfindungsgemässen Vorrichtung ist die separate Apparatur als eine Mühle, insbesondere eine Kaffeemühle, ausgebildet, und/oder das mindestens eine Halteelement an der Grundfläche angeordnet.

Ein weiterer Vorteil der Vorrichtung ist entsprechend, dass die Vorrichtung mit einer separaten Kaffeemühle (Apparatur) passgenau verbunden werden kann. Die Vorrichtung ist hierfür derart ausgebildet, dass das von der Mühle bereitgestellte, gemahlenen Kaffeepulver direkt und sauber durch die Einlassöffnung, den Innenraum und die Auslassöffnung in die Kaffeekapsel (Behältnis) einbringbar ist.

Durch die kompakte Ausführung der Vorrichtung und die modulare Kombinierbarkeit mit der separaten Apparatur kann ein vergleichsweise flexibles und einfaches Befüllsystem bereitgestellt werden.

In einer weiteren Ausführungsform der Vorrichtung ist das mindestens eine Halteelement als
- Lasche,
- Nut,
- Falz,
- Schlitz,
- Zapfenloch, oder
- Einkerbung,
ausgebildet, wobei eine an der Öffnung des Behältnisses angeordnete und senkrecht zu einer Mittelachse, insbesondere zu einer Längsachse, des Behältnisses auskragende Erhebung reversibel in das mindestens eine Halteelement einführbar ist und so das Behältnis temporär an der Vorrichtung gehalten werden kann.

In einer weiteren Ausführungsform weist die Vorrichtung weiter einen Standfuss auf, wobei der Standfuss an der Grundfläche angeordnet ist, oder sich die Mantelfläche in der zur Mittelachse parallelen Richtung über die Grundfläche hinaus erstreckt und so den Standfuss der Vorrichtung ausbildet, insbesondere wobei der Standfuss eine Einführöffnung aufweist, durch welche das Behältnis unterhalb der Auslassöffnung positionierbar ist, und/oder in das mindestens eine Halteelement einbringbar ist.

In einer weiteren Ausführungsform der Vorrichtung ist die Grundfläche oder der Standfuss so ausgebildet, dass ein Freistehen der Vorrichtung auf einem annähernd ebenen Untergrund bereitstellbar ist.

In einer weiteren Ausführungsform der Vorrichtung weist die Grundfläche oder der Standfuss einen derart grossen Durchmesser auf, dass die Vorrichtung bei einer Bewegung des Stempels gegen ein Kippen aus einer freistehenden Position gesichert ist.

In einer weiteren Ausführungsform der Vorrichtung weist der Stempel eine Feder auf, wobei die Feder eine Rückstellkraft bereitstellt, die in Richtung der Einlassöffnung wirkt.

In einer weiteren Ausführungsform der Vorrichtung
- dehnt sich die Deckfläche senkrecht zur Mittelachse aus,
- dehnt sich die Grundfläche senkrecht zur Mittelachse aus,
- dehnt sich die Einlassöffnung senkrecht zur Mittelachse aus, und/oder
- dehnt sich die Auslassöffnung senkrecht zur Mittelachse aus.

In einer weiteren Ausführungsform der Vorrichtung ist der Durchmesser der Einlassöffnung grösser ausgebildet als der Durchmesser der Auslassöffnung, insbesondere wobei der Innenraum von der Einlassöffnung hin zur Auslassöffnung trichterförmig ausgebildet ist.

In einer weiteren Ausführungsform ist die Vorrichtung handhaltbar und mobil ausgestaltet, insbesondere wobei
- die Vorrichtung eine Höhe aus einem Bereich von 6 cm bis 14 cm, insbesondere von 8 cm bis 12 cm, aufweist,
- die Vorrichtung eine Breite aus einem Bereich von 2,8 cm bis 10 cm, insbesondere aus einem Bereich von 6 cm bis 8 cm, aufweist,
- die Vorrichtung einen Durchmesser aus einem Bereich von 2,8 cm bis 10 cm, insbesondere aus einem Bereich von 6 cm bis 8 cm, aufweist,
- die Vorrichtung ein Gewicht aus einem Bereich von 100 Gramm bis 500 Gramm aufweist,
- die Einlassöffnung einen Durchmesser aus einem Bereich von 28 mm bis 100 mm, insbesondere aus einem Bereich von 60 mm bis 80 mm, aufweist,
- die Auslassöffnung einen Durchmesser aus einem Bereich von 28 mm bis 50 mm aufweist, und/oder
- die Auslassöffnung einen Durchmesser aufweist, der dem Durchmesser gängiger Kaffeekapselöffnungen entspricht.

Dadurch, dass die erfindungsgemässe Vorrichtung handhaltbar und mobil ausgestaltet ist, kann sie vom Benutzer einfach und bequem transportiert werden, beispielsweise auf Reisen, bei denen der Platz im Reisegepäck begrenzt ist. Dies verschafft dem Benutzer die Vorrichtung neben dem erhöhten Tragekomfort auch eine zusätzliche Flexibilität, da er die Vorrichtung jederzeit zur Verfügung haben kann und nicht auf alternative Lösungen zurückgreifen muss.

In einer weiteren Ausführungsform der Vorrichtung ist das mindestens eine Befestigungselement an dem Stempel, insbesondere an einem von der Einlassöffnung weniger weit beabstandeten Ende des Stempels, an der Mantelfläche, und/oder an der Deckfläche angeordnet.

In einer weiteren Ausführungsform der Vorrichtung ist das mindestens eine Befestigungselement als
- Magnet,
- Zapfen,
- Öse,
- Haken,
- Lasche,
- Schlaufe,
- Schraube,
- Zinken,
- Noppe, oder
- Druckknopf ausgebildet, und/oder
- aus einem ferromagnetischen Material gefertigt.

In einer weiteren Ausführungsform der Vorrichtung weist der Innenraum eine Führung auf, entlang welcher der Stempel bewegbar ist, wobei die Führung einen Anschlag bereitstellt, auf welchen ein orthogonal zur Mittelachse auskragendes Teilstück des entlang der Führung bewegten Stempels nach Zurücklegen einer definierten Strecke trifft und so eine Bewegungsstrecke des Stempels begrenzt.

In einer weiteren Ausführungsform der Vorrichtung ist der Stempel in der zur Mittelachse parallelen Richtung, insbesondere koaxial entlang der Mittelachse, durch die Auslassöffnung hindurch aus dem Innenraum hinaus bewegbar, insbesondere wobei durch die Bewegung des Stempels durch die Auslassöffnung hindurch aus dem Innenraum hinaus das Pulver oder Granulat das sich in dem durch das mindestens eine Halteelement an der Vorrichtung gehaltenen Behältnis befindet, mittels Druck, der von dem Stempel auf das Pulver oder Granulat ausgeübt wird, verdichtet wird.

Die Erfindung betrifft zudem ein System aus einer handhaltbaren Mühle, insbesondere einer Kaffeemühle, und einer Vorrichtung wie oben beschrieben, wobei die handhaltbare Mühle mindestens ein Gegenstück, dazu vorgesehen, mit dem entsprechenden Befestigungselement der Vorrichtung zusammenzuwirken und so eine temporäre Befestigung der Vorrichtung an der Mühle bereitzustellen, aufweist. In einer exemplarischen Ausführungsform des erfindungsgemässen Systems weist die handhaltbare Mühle weiter auf:
- ein Gehäuse, wobei das Gehäuse einen Mühleninnenraum umschliesst, und innerhalb des Mühleninnenraums eine, insbesondere um eine Mittelachse des Gehäuses rotierbare, Hohlwelle angeordnet ist,
- ein Rotationsmittel, insbesondere ein, um die Mittelachse des Gehäuses rotierbarer Handgriff, dazu vorgesehen, die Rotation der Hohlwelle bereitzustellen,
- einen Mahlkegel, dazu vorgesehen,
   o innerhalb des Mühleninnenraums und beabstandet von dem Gehäuse, und
   o fixiert, insbesondere nicht rotierbar,
      angeordnet zu sein, insbesondere wobei der Mahlkegel dazu vorgesehen ist, koaxial zur Mittelachse des Gehäuses angeordnet zu sein, und
- einen Mahlkranz, dazu vorgesehen, derart an der Hohlwelle angeordnet und an den Mahlkegel angeformt zu sein, dass
   ∘ der Mahlkranz bei einer Rotation der Hohlwelle um den Mahlkegel rotiert wird,
   ∘ ein Hohlraum zwischen Mahlkegel und Mahlkranz ausgebildet ist, wobei der Hohlraum dazu vorgesehen ist, ein Mahlgut, insbesondere Kaffeebohnen, die durch die Hohlwelle hindurch in den Hohlraum gelangen können, aufzunehmen, und
   ∘ bei einer Rotation des Mahlkranzes um den Mahlkegel, das in dem Hohlraum aufgenommene Mahlgut gemahlen wird.

In einer weiteren Ausführungsform des Systems ist das mindestens eine Gegenstück dazu vorgesehen, bei einer Rotation der Hohlwelle und des Mahlkranzes fixiert, insbesondere nicht rotierbar, zu sein, und mit einem an dem Stempel der Vorrichtung, insbesondere an dem von der Einlassöffnung weniger weit beabstandeten Ende des Stempels, angeordneten Befestigungselements zusammenzuwirken, insbesondere wobei das mindestens eine Gegenstück dazu vorgesehen ist, koaxial zur Mittelachse des Gehäuses angeordnet zu sein.

In einer weiteren Ausführungsform des Systems entspricht die Mittelachse des Gehäuses einer Längsachse des Gehäuses.

Das Gegenstück der Mühle kann insbesondere als Magnet ausgebildet sein. Das Gegenstück der Mühle kann insbesondere an einem unteren Ende, d.h. der zum Auslass des gemahlenen Pulvers vorgesehenen Auslassseite der Mühle, angeordnet sein. Insbesondere ist das Gegenstück zentral, z.B. auf der Mittelachse, angeordnet.

Das Befestigungselement ist derart korrespondierend zum Gegenstück ausgebildet, dass bei einer Kombination von Vorrichtung und Apparatur eine in Richtung der Deckfläche weisende Oberfläche des Befestigungselement zumindest weitgehend, insbesondere vollständig, überdeckt ist. Durch eine solche Ausgestaltung kann verhindert werden, dass bei einem Befüllen der Vorrichtung mit Pulver oder Granulat eine Ablagerung an dem Befestigungselement auftritt.

### Kurzbeschreibung der Zeichnungen

Die erfindungsgemässe Vorrichtung und das erfindungsgemässe System werden nachfolgend anhand von in den Figuren schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen. Im Einzelnen zeigen
- Fig. 1:: Aussenansicht einer exemplarischen Ausführungsform der erfindungsgemässen Vorrichtung;
- Fig. 2:: Ansicht eines Querschnitts einer exemplarischen Ausführungsform der erfindungsgemässen Vorrichtung;
- Fig. 3:: Draufsicht einer exemplarischen Ausführungsform der erfindungsgemässen Vorrichtung;
- Fig. 4:: Untersicht einer exemplarischen Ausführungsform der erfindungsgemässen Vorrichtung;
- Fig. 5:: Aussenansicht einer exemplarischen Ausführungsform des erfindungsgemässen Systems;
- Fig. 6:: Ansicht eines Querschnitts einer exemplarischen Ausführungsform des erfindungsgemässen Systems;
- Fig. 7:: Perspektivische Aussenansicht einer exemplarischen Ausführungsform des erfindungsgemässen Systems;

### Detaillierte Beschreibung der Zeichnungen

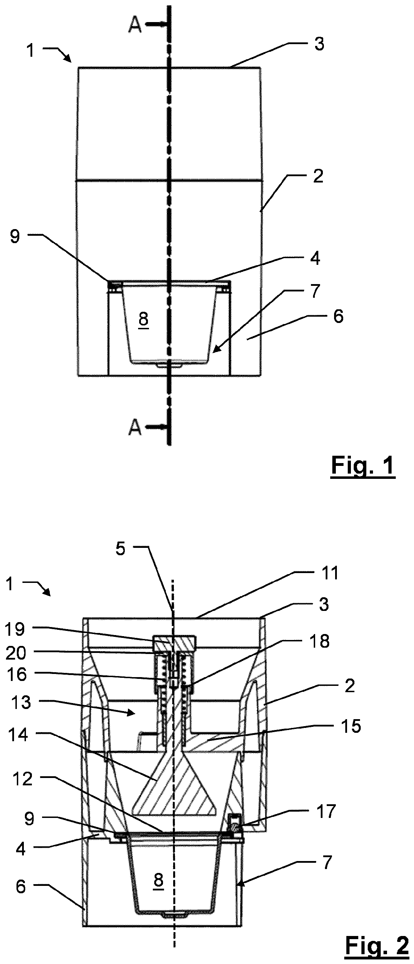

**Figur 1** zeigt eine Aussenansicht einer exemplarischen Ausführungsform der erfindungsgemässen Vorrichtung 1. In der gezeigten Ausführungsform hat die Vorrichtung 1 eine annähernd zylindrische Form, die aus einer Mantelfläche 2, einer Deckfläche 3 und einer Grundfläche 4 gebildet wird. Die Form der Vorrichtung 1 ist dabei nicht auf die eines Zylinders beschränkt. Die Vorrichtung kann prinzipiell in jeder Form realisiert werden, die über eine Mantel-, Deck- und Grundfläche verfügt. Beispiele hierfür sind Würfel, Quader, Prismen, Pyramidenstümpfe, etc.

Die räumliche Ausdehnung der Vorrichtung 1 ist vorzugsweise so gewählt, dass die Vorrichtung 1 handhaltbar und mobil ist. Dies wird insbesondere dadurch erreicht, dass die zylinderförmige Vorrichtung 1 mit einer Höhe zwischen 6 cm und 14 cm und einem Durchmesser aus dem Bereich von 1,8 cm bis 8 cm gefertigt wird. Weiterhin liegt das Gewicht der Vorrichtung 1 vorzugsweise zwischen 100 Gramm und 500 Gramm, was unter anderem durch die Wahl der Fertigungsmaterialien der Vorrichtung 1, insbesondere durch die Wahl der Fertigungsmaterialien von Mantel- 2, Deck- 3 und Grundfläche 4, gewährleistet wird. Beispiele für solche Fertigungsmaterialien sind Edelstahl, Aluminium, Holz, Keramik, Glas und Kunststoffe (z.B. teilkristalline Thermoplasten wie Polypropylen). Die Ausgestaltung der Vorrichtung 1 als entsprechend dimensionierter Zylinder hat den Vorteil, dass die Vorrichtung 1 so bequem mit einer Hand gehalten werden kann, ohne dass der Benutzer das Gefühl hat, die Vorrichtung 1 könne jederzeit aus der Hand rutschen oder Ecken oder Kanten in die Handfläche drücken.

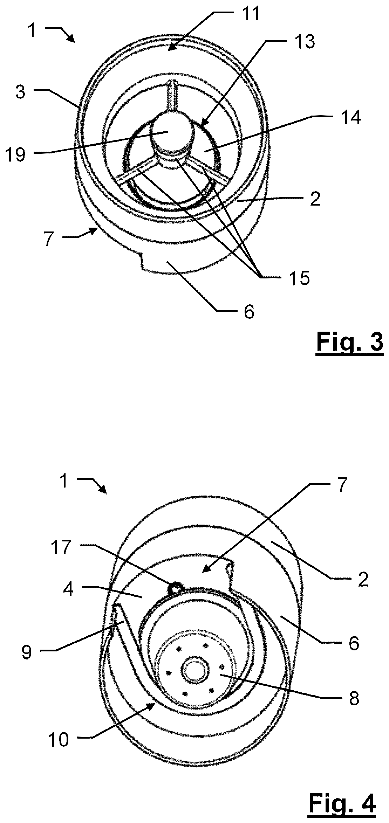

In **Figur 1** ist die Querschnittsfläche A eingezeichnet, entlang welcher der Querschnitt der Vorrichtung 1 erzeugt wird, der in Figur 2 gezeigt ist. Die Mantelfläche 2 umläuft/umgibt die Mittelachse 5, insbesondere die Längsachse, der Vorrichtung 1, wobei die Mittelachse 5 in der Querschnittsfläche A enthalten ist. Weiterhin weist die Vorrichtung 1 einen Standfuss 6 auf, wobei sich die Mantelfläche 2 in der zur Mittelachse 5 parallelen Richtung über die Grundfläche 4 hinaus erstreckt und so den Standfuss 6 der Vorrichtung 1 ausbildet. Dadurch, dass der Standfuss 6 durch das Erstrecken der zylindrischen Mantelfläche 2 über die Grundfläche 4 hinaus gebildet wird, weist der Standfuss 6 einen zylinderförmigen, hohlen Standfussinnenraum 10 auf, welcher in der gezeigten Ausführungsform der Vorrichtung 1 nicht durch eine Bodenplatte verschlossen und somit bei angehobener Vorrichtung 1 von unten zugänglich ist (siehe Figur 4).

Nachfolgend werden Ausführungsformen der erfindungsgemässen Vorrichtung 1 exemplarisch dahingehend beschrieben, dass die erfindungsgemässe Vorrichtung 1 dazu konfiguriert ist, Kaffeepulver in eine Kaffeekapsel 8 einzufüllen und das in die Kaffeekapsel 8 eingefüllte Kaffeepulver zu komprimieren. Es versteht sich dabei von selbst, dass die erfindungsgemässe Vorrichtung auch dazu konfiguriert ist, andere pulver- oder granulatförmige Stoffe, wie zum Beispiel Gewürze oder Getreide, in ein entsprechendes Gefäss, wie zum Beispiel ein Gewürzgläschen, einzufüllen und dort mittels des Stempels zu verdichten. Der Anwendungsbereich der erfindungsgemässen Vorrichtung erstreckt sich somit über das Bereitstellen von gefüllten Kaffeekapseln hinaus.

Der Standfuss 6 weist in der gezeigten Ausführungsform der Vorrichtung 1 eine Einführöffnung 7 auf, durch welche das Behältnis 8, das in Figur 1 und auch in den nachfolgenden Figuren als Kaffeekapsel 8 dargestellt ist, in das im Standfussinnenraum 10 angeordnete Halteelement 9 eingebracht wird. Das Halteelement 9 ist dabei exemplarisch als Nut ausgebildet, in welche der zur Seite (senkrecht zur Mittelachse, insbesondere zur Längsachse, der Kaffeekapsel) auskragende Rand der Kaffeekapselöffnung eingeschoben wird und so die Kaffeekapsel 8 temporär an der Vorrichtung 1 gehalten wird. Die Einführöffnung 7, die als Ausschnitt in der Mantelfläche 2 ausgebildet ist, ermöglicht es, dass die Kaffeekapsel 8 seitlich zur Vorrichtung 1 durch die Mantelfläche 2 hindurch in das im Standfussinnenraum 10 befindliche Halteelement 9 eingebracht werden kann. Eine solche Ausgestaltung von Standfuss 6 und Einführöffnung 7 hat den Vorteil, dass der auskragende Rand der Kaffeekapselöffnung auch bei einem Stehen der Vorrichtung 1 auf dem Standfuss 6 einfach in die Nut 9 eingeschoben und aus der Nut 9 herausgezogen werden kann, ohne dass die Mantelfläche 2 in irgendeiner Form (z.B. durch eine Tür in der Mantelfläche) geöffnet werden muss oder die Vorrichtung 1 angehoben werden muss, um so den Standfussinnenraum 10 für die Kaffeekapsel 8 zugänglich zu machen.

**Figur 2** zeigt einen Querschnitt einer exemplarischen Ausführungsform der erfindungsgemässen Vorrichtung 1 entlang der Querschnittsfläche A der Figur 1. Die erfindungsgemässe Vorrichtung 1 weist dabei eine Einlassöffnung 11 auf, durch die beispielsweise Kaffeepulver in die Vorrichtung 1 eingelassen werden kann, wobei sich die Einlassöffnung 11 innerhalb der Deckfläche 3 erstreckt. In der gezeigten Ausführungsform weist die Einlassöffnung 11 einen derart grossen Durchmesser auf, dass die verbliebene, die Einlassöffnung 11 umrandende Deckfläche 3 nahezu vollständig durch die Mantelfläche 2 gebildet wird. Die Vorrichtung 1 weist weiterhin eine Auslassöffnung 12 zum Auslassen des Kaffeepulvers aus der Vorrichtung 1 in die Kaffeekapsel 8 auf, wobei sich die Auslassöffnung 12 innerhalb der Grundfläche 4 erstreckt. Da die gezeigte exemplarische Ausführungsform der Vorrichtung 1 dazu vorgesehen ist, Kaffeepulver in Kaffeekapseln einzufüllen und dort zu verdichten, ist die Auslassöffnung 12 vorteilhaft derart ausgestaltet, dass ihr Durchmesser (zumindest annähernd) dem von gängigen Kaffeekapselöffnungen entspricht. In der gezeigten vorteilhaften Ausführungsform ist die Nut 9 derart an der Grundfläche 4 angeordnet, dass die Kaffeekapsel 8 mit einem möglichst geringen Abstand (vorteilhaft abstandslos bzw. mit einem Abstand von 0 mm) an der Vorrichtung 1 gehalten und die Kaffeekapselöffnung mit der Auslassöffnung 12 (zumindest weitgehend) zur Deckung gebracht wird. Dadurch wird sichergestellt, dass das Kaffeepulver, das aus der Vorrichtung 1 ausgelassen wird, in der Kaffeekapsel landet und nicht durch Öffnungen oder Schlitze neben die Kaffeekapsel gelangt. Auf diese Weise ist durch die erfindungsgemässe Vorrichtung 1 ein sauberes und genaues Befüllen der Kaffeekapsel 8 mit der gewünschten Menge Kaffeepulver gewährleistet.

An der Auslassöffnung 12 ist optional ein Schnappverschluss 17 angeordnet, beispielsweise in Form eines leicht herausstehenden, federgelagerten Schnappriegels/Schnappzunge/Druckknopfes, der beim Einführen der Kaffekapsel 8 in das Halteelement 9 durch den auskragenden Rand der Kaffeekapselöffnung nach innen gedrückt wird und in seine Ausgangsposition zurückschnappt, sobald die Kaffeekapsel 8 den Schnappverschluss 17 passiert hat und sich in der gewünschten Position befindet. Auf diese Weise wird die Kaffeekapsel 8 nicht nur durch das als Nut ausgestaltete Halteelement 9 in der gewünschten Position gehalten (also beispielsweise so, dass die Kaffeekapselöffnung mit der Auslassöffnung 12 zur Deckung gebracht ist), sondern auch durch den Schnappverschluss 17, der ein unerwünschtes Herausrutschen der Kaffeekapsel 8 aus der Nut 9 verhindert. Dies stellt ebenfalls das saubere und genaue Befüllen der Kaffeekapsel 8 mit der gewünschten Menge Kaffeepulver sicher.

Die erfindungsgemässe Vorrichtung 1 weist weiterhin einen hohlen Innenraum 13 auf, wobei der Innenraum 13 durch die Mantel- 2, Deck- 3 und Grundfläche 4 begrenzt wird und die Einlassöffnung 11 mit der Auslassöffnung 12 derart verbindet, dass Kaffeepulver, das durch die Einlassöffnung 11 in die Vorrichtung 1 eingelassen wurde, durch den Innenraum 13 hindurch zur Auslassöffnung 12 und durch die Auslassöffnung 12 hindurch in die Kaffeekapsel 8 gelangt. Insbesondere bei aufgestellter Vorrichtung 1, d.h. wenn die Vorrichtung 1 auf dem Standfuss 6 steht und die Mittelachse 5 einer Vertikalachse entspricht, kann das Kaffeepulver aufgrund der Schwerkraft von der Einlassöffnung 11 durch den Innenraum 13 und durch die Auslassöffnung 12 in die Kaffeekapsel 8 rieseln. Dabei ist es besonders vorteilhaft, dass der Durchmesser der Einlassöffnung 11 grösser ausgebildet ist als der Durchmesser der Auslassöffnung 12, was das Einfüllen des Kaffeepulvers in die Vorrichtung 1 erleichtert. Durch die trichterförmige Ausgestaltung des Innenraums 13 hin zur Auslassöffnung 12 wird das eingelassene Kaffeepulver zielgerichtet zur Kaffeekapselöffnung geleitet, ohne dass hierfür zusätzlicher Aufwand betrieben werden muss. In der gezeigten Ausführungsform der Vorrichtung 1 dehnen sich die Deckfläche 3, die Grundfläche 4, die Einlassöffnung 11 und die Auslassöffnung 12 senkrecht zur Mittelachse aus.

**Figur 2** zeigt ferner den bewegbaren Stempel 14 zum Verdichten von in der Kaffeekapsel 8 befindlichem Kaffeepulver, die Führung 15 entlang welcher der Stempel 14 bewegt wird und die Feder 16, die eine Rückstellkraft bereitstellt, die in Richtung der Einlassöffnung 11 wirkt. Die Bauteile 14, 15 und 16 sind dabei innerhalb des Innenraums 13 angeordnet. Die Führung 15 ist über Streben mit der Mantelfläche 2 verbunden und dient somit zusätzlich dazu, den Stempel 14 und die Feder 16 auszurichten (beispielsweise koaxial zur Mittelachse 5) und in ihrer ausgerichteten Position zu halten. Wirkt nun eine zur Mittelachse 5 koaxiale Kraft in Richtung der Austrittsöffnung 12 auf das mit Bezugszeichen 19 gekennzeichnete obere Ende des Stempels 14, also auf das von der Deckfläche 3 bzw. der Einlassöffnung 11 weniger weit beabstandeten Ende des Stempels 14, so wird der Stempel 14 in Richtung der Auslassöffnung 12 entlang der Führung 15 bewegt, die als eine Art Kanal/Rohr ausgebildet ist, in welchem zumindest ein Teil des Stempels 14 verläuft und somit die Bewegungsrichtung des Stempels 14 vorgibt. Diese Bewegung des Stempels 14 verläuft koaxial entlang der Mittelachse 5, wobei dabei ein orthogonal zur Mittelachse 5 auskragendes Teilstück 20 des Stempels 14 auf die Feder 16 drückt und diese gestaucht bzw. verpresst wird. Der Stempel 14 kann soweit entlang der Führung 15 und somit auch entlang der Mittelachse 5 in Richtung Auslassöffnung 12 bewegt werden, bis das auskragende Teilstück 20 auf einen von der Führung 15 bereitgestellten Anschlag 18 trifft. Auf diese Weise wird die Bewegungsstrecke des Stempels 14 innerhalb des Innenraums 13 begrenzt. Die gestauchte Feder 16 stellt dabei eine Rückstellkraft bereit, welche dafür sorgt, dass der Stempel 14 wieder in seine Ausgangsposition zurückbewegt wird, sobald die koaxial zur Mittelachse 5 in Richtung Auslassöffnung 12 wirkende Kraft wieder abnimmt. In einer bevorzugten Ausführungsform der Vorrichtung 1 ist das Zusammenwirken der Bauteile 14, 15, 18 und 20 so ausgebildet, dass die Bewegungsstrecke des Stempels 14 derart gross ist, dass der Stempel 14 koaxial entlang der Mittelachse durch die Auslassöffnung 12 hindurch aus dem Innenraum 13 hinausbewegt werden kann und so Druck auf das Kaffeepulver ausüben kann, das sich in der durch das Halteelement 9 an der Vorrichtung 1 gehaltenen Kaffeekapsel 8 befindet.

Die beispielhafte Ausführungsform der erfindungsgemässen Vorrichtung 1 umfasst ferner ein Befestigungselement 19, wobei das Befestigungselement 19 dazu vorgesehen ist, mit einem entsprechenden Gegenstück 21 an einer Kaffeemühle 22 zusammenzuwirken und so eine temporäre Befestigung der Vorrichtung 1 an der Kaffeemühle 22 bereitzustellen. Das Befestigungselement 19 ist dabei an dem von der Einlassöffnung 11 weniger weit beabstandeten Ende des Stempels 14 angeordnet. Es sind aber auch weitere Ausführungsformen der erfindungsgemässen Vorrichtung 1 realisierbar, in welchen weitere Befestigungselemente (zusätzlich zu oder anstelle des Befestigungselements 19) beispielsweise an der Mantelfläche 2 und/oder an der Deckfläche 3 angeordnet sind. Das Befestigungselement 19 kann dabei als Magnet ausgebildet sein und das Gegenstück 21 aus einem ferromagnetischen Material gefertigt sein (oder umgekehrt), wodurch eine Befestigung der Vorrichtung 1 an der Kaffeemühle 22 durch die wirkende magnetische Anziehungskraft der Bauteile 19 und 21 bereitgestellt wird. Es ist aber auch ein rein mechanisches Zusammenwirken der Bauteile 19 und 21 realisierbar, zum Beispiel dadurch, dass das Befestigungselement 19 als Haken und das Gegenstück 21 als Öse ausgebildet ist. Eine Ausgestaltung der Bauteile 19 und 21 als Magnet und Ferromagnet hat dabei den Vorteil, dass die Vorrichtung 1 einfach durch das Aufbringen einer der magnetischen Anziehungskraft entgegenwirkenden Kraft von der Kaffeemühle 22 entfernt/abgezogen werden kann, ohne dass dabei beispielsweise ein mühsames Ausfädeln eines Hakens aus einer Öse erforderlich ist.

**Figur 3** zeigt eine Draufsicht einer exemplarischen Ausführungsform der erfindungsgemässen Vorrichtung 1. Hierbei ist zu erkennen, dass sich die Einlassöffnung 11 mit einem derart grossen Durchmesser innerhalb der Deckfläche 3 ausdehnt, dass die Deckfläche 3 fast vollständig auf eine Ausdehnung entsprechend der Wanddicke/Wandstärke des Mantels 2 reduziert ist. Weiterhin ist der Innenraum 13 gezeigt, in dem der Stempel 14 und die Führung 15 angeordnet sind. Die Führung 15 ist dabei als eine Art Rohr ausgebildet, welches durch Querstreben mit dem Mantel 2 verbunden ist und dadurch derart innerhalb des Innenraums 13 fixiert ist, dass sich der zumindest teilweise innerhalb des Rohres angeordnete Stempel 14 nur koaxial entlang der Mittelachse 5 bewegt werden kann. Auf diese Weise ist ein gezieltes Bewegen/Aufdrücken des Stempels 14 auf das in der Kaffeekapsel 8 befindliche Kaffeepulver sichergestellt.

Dadurch, dass das Befestigungselement 19, der Stempel 14 und die Führung 15 koaxial entlang der Mittelachse 5 im Innenraum 13 angeordnet sind und ihre Ausdehnung orthogonal zur Mittelachse 5 begrenzt ist, kann das durch die Einlassöffnung 11 in den Innenraum 13 eingelassene Kaffeepulver seitlich an den Bauteilen 19, 14 und 15 vorbei zur Auslassöffnung 12 gelangen, ohne dass dabei Flächen vorliegen, an welchen sich Kaffeepulver ablagern kann. Eine solche Ablagerung von Kaffeepulver innerhalb der Vorrichtung 1 würde zum einen zu einer Verschmutzung bis hin zu einem Verstopfen der Vorrichtung 1 und zum anderen zu Abweichungen in der in die Kaffeekapsel 8 eingefüllten Menge an Kaffeepulver führen. Aus diesem Grund sind die Querstreben der Führung 15 vorteilhaft besonders schmal und spitz zulaufend ausgestaltet, um möglichst keine Ablageflächen für Kaffeepulver zu bilden. Die trichterförmige Ausgestaltung des Innenraums 13 dient unter anderem dem Zweck, das Rieseln des Kaffeepulvers in Richtung der Auslassöffnung 12 zu bewerkstelligen und dadurch ebenfalls ein Ablagern von Kaffeepulver in der Vorrichtung 1 zu verhindern.

**Figur 4** zeigt eine Untersicht einer exemplarischen Ausführungsform der erfindungsgemässen Vorrichtung 1. Hierbei ist zu erkennen, dass der Standfuss 6 dadurch gebildet wird, dass sich die Mantelfläche 2 in der zur Mittelachse 5 parallelen Richtung über die Grundfläche 4 hinaus erstreckt. Innerhalb des zylinderförmigen Standfusses 6 ist der hohle Standfussinnenraum 10 ausgebildet, wobei der Standfuss 6 an einer Stelle einen Ausschnitt aufweist, der die Einführöffnung 7 bildet. Durch die Einführöffnung 7 kann die Kaffeekapsel 8 in das Halteelement 9 eingebracht werden, wobei das Halteelement 9 in der gezeigten Ausführungsform als eine halbkreisförmige Nut (U-förmig) ausgebildet ist, die an der Grundfläche 4 angeordnet ist. Der seitlich abstehende Rand der Kaffeekapselöffnung wird dabei in die Nut 9 eingeführt und die Kaffeekapsel 8 wird dann (horizontal) soweit die Nut 9 entlang geschoben, bis sie die durch die U-Form der Nut 9 vorgegebene Endposition erreicht hat.

Wird die Kaffeekapsel 8 mit den Fingern die Nut 9 entlang geschoben/gedrückt, so trifft eine erste Stelle des seitlich zur Kaffeekapselöffnung auskragenden Rands der Kaffeekapsel 8 auf den Schnappriegel des Schnappverschlusses 17, welcher durch den vom Finger auf den Rand der Kaffeekapselöffnung übertragenen Druck in eine in der Grundfläche 4 eingelassene Vertiefung gedrückt wird. Auf diese Weise kann dann die Kaffeekapsel 8 (horizontal) weiter eingeschoben werden, wobei sobald die erste Stelle des seitlich zur Kaffeekapselöffnung auskragenden Rands den Schnappriegel passiert hat, dieser wieder aus der Vertiefung herausschnappt. Wird dann die Kaffeekapsel 8 noch weiter bis zur vorgegebenen Endposition die Nut 9 entlang geschoben, so wird der Schnappriegel von der gegenüberliegenden zweiten Stelle des auskragenden Rands erneut in seine Vertiefung gedrückt, bis auch diese zweite Stelle den Schnappriegel passiert hat. Der Schnappriegel der Schnappvorrichtung 17 dient somit der zusätzlichen Fixierung der Kaffeekapsel an der vorgegebenen Endposition und verhindert zusätzlich zur Nut 9, dass die Kaffeekapsel während des Befüll- und/oder des Verdichtungsvorgangs verrutscht und Kaffeepulver in unerwünschter Weise aus der Vorrichtung 1 und/oder der Kaffeekapsel 8 austritt.

In der Endposition ist die Kaffeekapselöffnung vertikal unter und weitgehend deckungsgleich mit der Auslassöffnung 12 (Abweichung von höchstens wenigen Millimetern, insbesondere einer Abweichung von höchstens 3 mm), die vorzugsweise einen Durchmesser aufweist, der annähernd dem Durchmesser der Kaffeekapselöffnung entspricht (Abweichung von wenigen Millimetern, insbesondere einer Abweichung von höchstens 3 mm). Weiterhin ist die Nut 9 derart nah (vorzugsweise mit keinem Abstand) an der Grundfläche 4 angeordnet, dass bei eingeschobener Kaffeekapsel 8 nahezu kein Schlitz/Spalt (vorzugsweise eine Spaltbreite von höchstens 3 mm) mehr zwischen der eingeschobenen Kaffeekapsel 8 und der Auslassöffnung 12 besteht und somit auch kein Kaffeepulver an der Kaffeekapsel 8 vorbei aus der Vorrichtung 1 austreten kann.

Nachdem das Kaffeepulver in die eingeschobene Kaffeekapsel 8 eingefüllt und mittels des Stempels verdichtet wurde, kann die gefüllte Kaffeekapsel 8 beispielsweise mit dem Finger in Richtung der Einführöffnung 7 zurückgeschoben/zurückgedrückt werden. Der hierdurch ausgeübte Druck des auskragenden Rands der Kaffeekapselöffnung auf den Schnappriegel der Schnappvorrichtung 17 reicht dabei aus, den federnd gelagerten Schnappriegel in seine in der Grundfläche 4 eingelassene Vertiefung zu drücken, was ein Entfernen der gefüllten Kaffeekapsel 8 aus dem Halteelement 9 ermöglicht.

Nachfolgend werden Ausführungsformen des erfindungsgemässen Systems 23 exemplarisch dahingehend beschrieben, dass die handhaltbare Mühle 22 (zuvor beispielhaft auch als separate Apparatur 22 bezeichnet) als Kaffeemühle ausgebildet ist somit Kaffeepulver bereitstellt, welches mittels der erfindungsgemässen Vorrichtung 1 in eine Kaffeekapsel 8 eingefüllt und dort verdichtet wird. Es versteht sich dabei von selbst, dass die handhaltbare Mühle 22 dazu ausgebildet ist, nicht nur Kaffeebohnen, sondern auch anderes grobkörniges Mahlgut, wie beispielsweise Pfefferkörner oder Getreidekörner, zu zermahlen und das beispielsweise so erzeugte Pfeffer- oder Getreidepulver durch die Einlassöffnung 11 in die Vorrichtung 1 einzulassen. Wie zuvor bereits beschrieben, ist die erfindungsgemässe Vorrichtung 1 auch dazu konfiguriert, dieses Pfeffer- oder Getreidepulver (beispielhaft für andere pulver- oder granulatförmige Stoffe) in ein entsprechendes Behältnis, wie zum Beispiel ein Gewürzgläschen, einzufüllen und dort mittels des Stempels 14 zu verdichten. Der Anwendungsbereich des erfindungsgemässen Systems 23 erstreckt sich somit über das Bereitstellen von mit frisch gemahlenem Kaffeepulver gefüllten Kaffeekapseln hinaus.

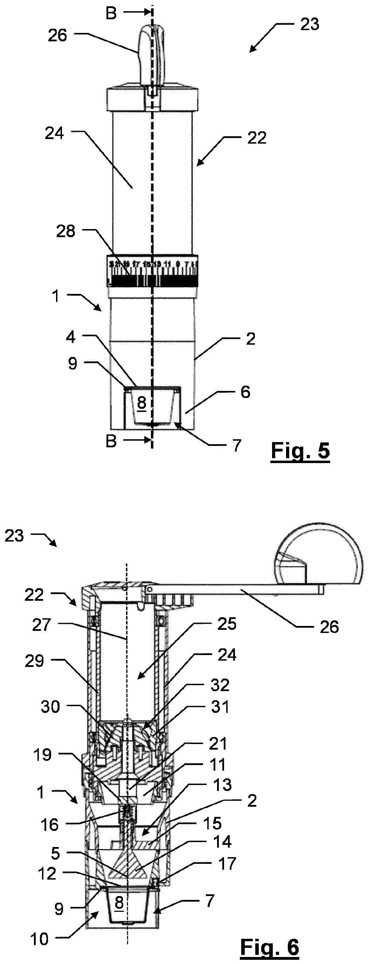

**Figur 5** zeigt eine Aussenansicht einer exemplarischen Ausführungsform des erfindungsgemässen Systems 23. Bei dieser exemplarischen Ausführungsform des erfindungsgemässen Systems 23 ist die in den Figuren 1 bis 4 beschriebene Vorrichtung 1 durch das Zusammenwirken des Befestigungselements 19 mit dem Gegenstück 21 zumindest temporär an der handhaltbaren Kaffeemühle 22 befestigt, wobei die Kaffeemühle 22 das Kaffeepulver bereitstellt, welches mittels der Vorrichtung 1 in die Kaffeekapsel 8 eingefüllt und dort verdichtet wird.

Möchte der Benutzer des Systems 23 nur einen der beiden Teile des Systems 23 verwenden, so kann er einfach die Verbindung der Bauteile 19 und 21 voneinander lösen und hat so die Kaffeemühle 22 von der Vorrichtung 1 getrennt. Diese reversible Verbindung/Trennung von Vorrichtung 1 und Kaffeemühle 22 erlaubt es dem Benutzer:
- die Vorrichtung 1 ohne die Kaffeemühle 22 zu verwenden, zum Beispiel, wenn er bereits gemahlenes Kaffeepulver vorliegen hat,
- die Vorrichtung 1 zusammen mit der Kaffeemühle 22 zu verwenden, zum Beispiel, wenn er Kaffeebohnen vorliegen hat und eine Kaffeekapsel mit diesem Kaffee befüllen möchte, oder
- die Kaffeemühle 22 ohne die Vorrichtung 1 zu verwenden, wenn er Kaffeebohnen vorliegen hat und mit diesen beispielsweise einen Filterkaffee aufbrühen möchte.

Diese Trennbarkeit der Teile des erfindungsgemässen Systems 23 ermöglicht eine sehr flexible Anwendbarkeit und räumt somit wesentliche Nachteile des Stands der Technik aus.

Figur 5 zeigt zudem das Gehäuse 24 der Kaffeemühle 22, wobei das Gehäuse 24 zylinderförmig ausgestaltet ist (Vorteil der zylinderförmigen Ausgestaltung des Gehäuses 24 ist unter anderem das Ermöglichen einer bequemen Handhaltung, ohne dass Ecken und/oder Kanten in die Hand drücken) und einen Mühleninnenraum 25 umschliesst, und das Rotationsmittel 26, ausgebildet als ein um die Mittelachse 27 des Gehäuses 24 rotierbarer Handgriff 26. Die Mittelachse 27, insbesondere die Längsachse, der Handmühle 22 ist in der Querschnittsfläche B enthalten. Weiterhin verfügt die gezeigte Ausführungsform der Handmühle 22 über das Stellrad 28, mit dem der Mahlgrad des von der Kaffeemühle 22 bereitgestellten Kaffeepulvers millimetergenau und reproduzierbar eingestellt werden kann. Alternativ ist auch eine Ausführungsform des erfindungsgemässen Systems 23 realisierbar, bei welchem mindestens ein Befestigungselement 19 an der Deckfläche 3 und/oder an der Mantelfläche 2 der Vorrichtung 1 und mindestens ein Gegenstück 21 an dem Mantel des Gehäuses 24 angeordnet ist.

**Figur 6** zeigt einen Querschnitt einer exemplarischen Ausführungsform des erfindungsgemässen Systems entlang der Querschnittsfläche B der Figur 5. Da es sich bei der in den Figuren 5 und 6 gezeigten Ausführungsform der Vorrichtung 1 um eine Ausführungsform gemäss den Figuren 1 bis 4 handelt, wird in der nachfolgenden Figurenbeschreibung nicht erneut auf die Vorrichtung 1 eingegangen.

Wie bereits angesprochen, umfasst die exemplarische Ausführungsform des erfindungsgemässen Systems 23 die handhaltbare Kaffeemühle 22 und die Vorrichtung 1, wobei diese beiden Teile durch das Zusammenwirken des Befestigungselements 19 der Vorrichtung 1 mit dem Gegenstück 21 der Kaffeemühle 22 temporär miteinander verbunden sind. Die handhaltbare Kaffeemühle 22 weist dabei das zylinderförmige Gehäuse 24 auf, wobei das Gehäuse 24 den Mühleninnenraum 25 umschliesst. Innerhalb des Mühleninnenraums 25 ist die Hohlwelle 29 angeordnet, wobei die Hohlwelle 29 in dieser exemplarischen Ausführungsform des erfindungsgemässen Systems 23 ebenfalls zylinderförmig ist und um die Mittelachse 27 des Gehäuses 24 rotiert. Diese Rotation der Hohlwelle 29 wird dabei durch den rotierbaren Handgriff 26 bereitgestellt.

Innerhalb des Mühleninnenraums 25 ist weiterhin der Mahlkegel 30 koaxial zur Mittelachse 27 und beabstandet zum Gehäuse 24 angeordnet, wobei der Mahlkegel 30 derart in dem Mühleninnenraum 25 fixiert ist, dass sich der Mahlkegel 30 bei einer Rotation des Handgriffs 26 und der Hohlwelle 29 nicht mitrotiert. Der Mahlkranz 31 hingegen ist an der Hohlwelle 29 angeordnet und wird somit bei einer Rotation der Hohlwelle 29 um den Mahlkegel 30 rotiert. Der Mahlkranz 31 ist zudem derart an den Mahlkegel 30 angeformt, dass sich dazwischen der Hohlraum 32 ausbildet, wobei in dem Hohlraum befindliche Kaffeebohnen bei einer Rotation des Mahlkranzes 31 um den Mahlkegel 30 gemahlen werden. Die Kaffeebohnen können dabei durch eine Öffnung in der Deckfläche (die Fläche an dem Ende der Mühle 22, an dem der Griff 26 angebracht ist) in den Mühleninnenraum 25, insbesondere in das Innere der Hohlwelle 29, eingeschüttet werden und fallen dann durch das hohle Innere der Hohlwelle 29 bis in den Hohlraum 32.

Das Gegenstück 21 ist in der gezeigten Ausführungsform des Systems 23 koaxial zur Mittelachse 27 angeordnet und rotiert bei einer Rotation der Hohlwelle 29 und des Mahlkranzes 31 nicht mit. Weiterhin ist das Gegenstück 21 am unteren Ende der Kaffeemühle 22 angeordnet, also an dem Ende der Kaffeemühle 22, das dem den Handgriff 26 aufweisenden Ende der Kaffeemühle 22 gegenüberliegt. Dadurch wird das Zusammenwirken mit dem Befestigungselements 19 ermöglicht, das an dem von der Einlassöffnung 11 weniger weit beabstandeten Ende des Stempels 14 angeordnet ist.

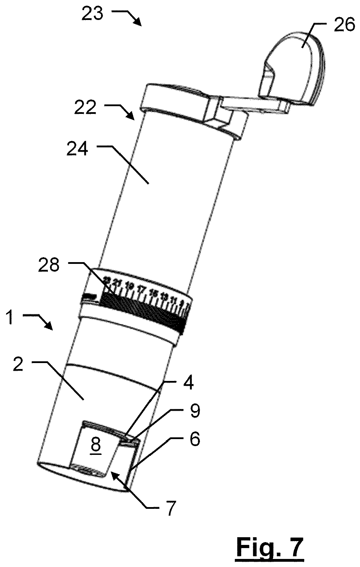

**Figur 7** zeigt zur weiteren Veranschaulichung eine perspektivische Aussenansicht einer exemplarischen Ausführungsform des erfindungsgemässen Systems.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vorrichtung (1) zum Einfüllen und Verdichten von Pulver oder Granulat, insbesondere von Kaffeepulver, in ein Behältnis (8), insbesondere in eine Kaffeekapsel (8), wobei das Pulver oder Granulat durch eine separate Apparatur (22) bereitstellbar ist und wobei die Vorrichtung (1) aufweist:
• eine Mantelfläche (2), wobei die Mantelfläche (2) eine Mittelachse (5) der Vorrichtung (1) umläuft, insbesondere wobei die Mittelachse (5) der Vorrichtung (1) einer Längsachse der Vorrichtung (1) entspricht,
• mindestens eine Einlassöffnung (11) zum Einlassen des Pulvers oder Granulats in die Vorrichtung (1), wobei sich die mindestens eine Einlassöffnung (11) innerhalb einer Deckfläche (3) der Vorrichtung (1) erstreckt,
• mindestens eine Auslassöffnung (12) zum Auslassen des Pulvers oder Granulats aus der Vorrichtung (1) in das Behältnis (8), wobei sich die mindestens eine Auslassöffnung (12) innerhalb einer Grundfläche (4) der Vorrichtung (1) erstreckt,
• einen Innenraum (13), wobei der Innenraum (13)
∘ zumindest von der Mantelfläche (2) begrenzt wird, und
∘ die Einlassöffnung (11) mit der Auslassöffnung (12) verbindet, und
• einen bewegbaren Stempel (14) zum Verdichten von in dem Behältnis (8) befindlichem Pulver oder Granulat, wobei der Stempel (14) innerhalb des Innenraums (13) angeordnet ist und dazu vorgesehen ist, in einer zur Mittelachse (5) parallelen Richtung, insbesondere koaxial entlang der Mittelachse (5), bewegt zu werden,
**dadurch gekennzeichnet, dass** die Vorrichtung (1) weiter aufweist:
• mindestens ein Befestigungselement (19), wobei das mindestens eine Befestigungselement (19) dazu vorgesehen ist, mit einem entsprechenden Gegenstück (21) an der separaten Apparatur (22) zusammenzuwirken und so eine temporäre Befestigung der Vorrichtung (1) an der separaten Apparatur (22) bereitzustellen, und
• mindestens ein Halteelement (9), wobei das mindestens eine Halteelement (9) dazu vorgesehen ist, das Behältnis (8) temporär an der Vorrichtung (1) zu halten, insbesondere wobei das Halteelement (9) so ausgebildet ist, dass das Behältnis (8) mit einem Abstand von 0 mm bis 50 mm an der Vorrichtung (1) gehalten und/oder eine Öffnung des Behältnisses (8) mit der Auslassöffnung (12) zumindest weitgehend zur Deckung gebracht werden kann.

2. Vorrichtung (1) nach Anspruch 1, wobei
• die separate Apparatur (22) als eine Mühle, insbesondere eine Kaffeemühle, ausgebildet ist, und/oder
• das mindestens eine Halteelement (9) an der Grundfläche (4) angeordnet ist.

3. Vorrichtung (1) nach einem der vorhergehenden Ansprüche, wobei das mindestens eine Halteelement (9) als
• Lasche,
• Nut,
• Falz,
• Schlitz,
• Zapfenloch, oder
• Einkerbung,
ausgebildet ist, wobei eine an der Öffnung des Behältnisses (8) angeordnete und senkrecht zu einer Mittelachse, insbesondere zu einer Längsachse, des Behältnisses (8) auskragende Erhebung reversibel in das mindestens eine Halteelement (9) einführbar ist und so das Behältnis (8) temporär an der Vorrichtung gehalten werden kann.

4. Vorrichtung (1) nach einem der vorhergehenden Ansprüche, wobei die Vorrichtung (1) weiter einen Standfuss (6) aufweist, wobei
• der Standfuss (6) an der Grundfläche (4) angeordnet ist, oder
• sich die Mantelfläche (2) in der zur Mittelachse (5) parallelen Richtung über die Grundfläche (4) hinaus erstreckt und so den Standfuss (6) der Vorrichtung (1) ausbildet,
insbesondere wobei der Standfuss (6) eine Einführöffnung (7) aufweist, durch welche das Behältnis (8)
• unterhalb der Auslassöffnung (12) positionierbar ist, und/oder
• in das mindestens eine Halteelement (9) einbringbar ist.

5. Vorrichtung (1) nach einem der vorhergehenden Ansprüche, wobei der Stempel (14) eine Feder (16) aufweist, wobei die Feder (16) eine Rückstellkraft bereitstellt, die in Richtung der Einlassöffnung (11) wirkt.

6. Vorrichtung (1) nach einem der vorhergehenden Ansprüche, wobei
• sich die Deckfläche (3) senkrecht zur Mittelachse (5) ausdehnt,
• sich die Grundfläche (4) senkrecht zur Mittelachse (5) ausdehnt,
• sich die Einlassöffnung (11) senkrecht zur Mittelachse (5) ausdehnt, und/oder
• sich die Auslassöffnung (12) senkrecht zur Mittelachse (5) ausdehnt.

7. Vorrichtung (1) nach einem der vorhergehenden Ansprüche, wobei der Durchmesser der Einlassöffnung (11) grösser ausgebildet ist als der Durchmesser der Auslassöffnung (12), insbesondere wobei der Innenraum (13) von der Einlassöffnung (11) hin zur Auslassöffnung (12) trichterförmig ausgebildet ist.

8. Vorrichtung (1) nach einem der vorhergehenden Ansprüche, wobei die Vorrichtung (1) handhaltbar und mobil ausgestaltet ist, insbesondere wobei
• die Vorrichtung (1) eine Höhe aus einem Bereich von 6 cm bis 14 cm aufweist,
• die Vorrichtung (1) eine Breite aus einem Bereich von 2,8 cm bis 10 cm aufweist,
• die Vorrichtung (1) einen Durchmesser aus einem Bereich von 2,8 cm bis 10 cm aufweist,
• die Vorrichtung (1) ein Gewicht aus einem Bereich von 100 Gramm bis 500 Gramm aufweist,
• die Einlassöffnung (11) einen Durchmesser aus einem Bereich von 28 mm bis 100 mm aufweist, die Auslassöffnung (12) einen Durchmesser im Bereich von 28 mm bis 50 mm aufweist, und/oder
• die Auslassöffnung (12) einen Durchmesser aufweist, der dem Durchmesser gängiger Kaffeekapselöffnungen entspricht.

9. Vorrichtung (1) nach einem der vorhergehenden Ansprüche, wobei das mindestens eine Befestigungselement (19)
• an dem Stempel (14), insbesondere an einem von der Einlassöffnung (11) weniger weit beabstandeten Ende des Stempels (14),
• an der Mantelfläche (2), und/oder
• an der Deckfläche (3) angeordnet ist.

10. Vorrichtung (1) nach einem der vorhergehenden Ansprüche, wobei das mindestens eine Befestigungselement (19) als
• Magnet,
• Zapfen,
• Öse,
• Haken,
• Lasche,
• Schlaufe,
• Schraube,
• Zinken,
• Noppe, oder
• Druckknopf ausgebildet ist, und/oder
• aus einem ferromagnetischen Material gefertigt ist.

11. Vorrichtung (1) nach einem der vorhergehenden Ansprüche, wobei der Innenraum (13) eine Führung (15) aufweist, entlang welcher der Stempel (14) bewegbar ist, wobei die Führung (15) einen Anschlag (18) bereitstellt, auf welchen ein orthogonal zur Mittelachse (5) auskragendes Teilstück (20) des entlang der Führung (15) bewegten Stempels (14) nach Zurücklegen einer definierten Strecke trifft und so eine Bewegungsstrecke des Stempels (14) begrenzt.

12. Vorrichtung (1) nach einem der vorhergehenden Ansprüche, wobei der Stempel (14) in der zur Mittelachse (5) parallelen Richtung, insbesondere koaxial entlang der Mittelachse (5), durch die Auslassöffnung (12) hindurch aus dem Innenraum (13) hinaus bewegbar ist, insbesondere wobei durch die Bewegung des Stempels (14) durch die Auslassöffnung (12) hindurch aus dem Innenraum (13) hinaus das Pulver oder Granulat das sich in dem durch das mindestens eine Halteelement (9) an der Vorrichtung (1) gehaltenen Behältnis (8) befindet, mittels Druck, der von dem Stempel (14) auf das Pulver oder Granulat ausgeübt wird, verdichtet wird.

13. System (23) aus einer handhaltbaren Mühle (22), insbesondere einer Kaffeemühle, und einer Vorrichtung (1) nach einem der Ansprüche 1 bis 12, wobei die handhaltbare Mühle (22) mindestens ein Gegenstück (21), dazu vorgesehen, mit dem entsprechenden Befestigungselement (19) der Vorrichtung (1) zusammenzuwirken und so eine temporäre Befestigung der Vorrichtung (1) an der Mühle (22) bereitzustellen, aufweist.

14. System (23) nach Anspruch 13, wobei die handhaltbare Mühle (22) weiter aufweist:
• ein Gehäuse (24), wobei das Gehäuse (24) einen Mühleninnenraum (25) umschliesst, und innerhalb des Mühleninnenraums (25) eine, insbesondere um eine Mittelachse (27) des Gehäuses (24) rotierbare, Hohlwelle (29) angeordnet ist,
• ein Rotationsmittel (26), insbesondere ein, um die Mittelachse (27) des Gehäuses (24) rotierbarer Handgriff (26), dazu vorgesehen, die Rotation der Hohlwelle (29) bereitzustellen,
• einen Mahlkegel (30), dazu vorgesehen,
∘ innerhalb des Mühleninnenraums (25) und beabstandet von dem Gehäuse (24), und
∘ fixiert, insbesondere nicht rotierbar,
angeordnet zu sein, insbesondere wobei der Mahlkegel (30) dazu vorgesehen ist, koaxial zur Mittelachse (27) des Gehäuses (24) angeordnet zu sein, und
• einen Mahlkranz (31), dazu vorgesehen, derart an der Hohlwelle (29) angeordnet und an den Mahlkegel (30) angeformt zu sein, dass
∘ der Mahlkranz (31) bei einer Rotation der Hohlwelle (29) um den Mahlkegel (30) rotiert wird,
∘ ein Hohlraum (32) zwischen Mahlkegel (30) und Mahlkranz (31) ausgebildet ist, wobei der Hohlraum (32) dazu vorgesehen ist, ein Mahlgut, insbesondere Kaffeebohnen, die durch die Hohlwelle (29) hindurch in den Hohlraum (32) gelangen können, aufzunehmen, und
∘ bei einer Rotation des Mahlkranzes (31) um den Mahlkegel (30), das in dem Hohlraum (32) aufgenommene Mahlgut gemahlen wird.

15. System (23) nach Anspruch 13 oder 14, wobei das mindestens eine Gegenstück (21) dazu vorgesehen ist,
• bei einer Rotation der Hohlwelle (29) und des Mahlkranzes (31) fixiert, insbesondere nicht rotierbar, zu sein, und
• mit einem an dem Stempel (14) der Vorrichtung (1), insbesondere an dem von der Einlassöffnung (11) weniger weit beabstandeten Ende des Stempels (14), angeordneten Befestigungselements (19) zusammenzuwirken,
insbesondere wobei das mindestens eine Gegenstück (21) dazu vorgesehen ist, koaxial zur Mittelachse (27) des Gehäuses (24) angeordnet zu sein.
